# EUROPEAN PATENT APPLICATION

(11) **EP 4 471 930 A1**
(43) Date of publication of application: **04.12.2024**
(21) Application number: 23894937.4
(22) Date of filing: 17.11.2023
(51) Int. Cl.: H01M 10/0587, H01M 10/052, H01M 50/107

(54) **JELLY ROLL TYPE ELECTRODE ASSEMBLY AND SECONDARY BATTERY COMPRISING SAME**

(30) Priority: 21.11.2022 KR 20220156478; 14.11.2023 KR 20230157134
(71) Applicant: LG Energy Solution, Ltd., Seoul 07335 (KR)
(72) Inventor: KIM, Yun Hwa, Daejeon 34122 (KR); LEE, Joonghoon, Daejeon 34122 (KR); HAN, In Kee, Daejeon 34122 (KR)
(74) Representative: Goddar, Heinz J.
(86) International application number: PCT/KR2023/018515
(87) International publication number: WO 2024/112009

(57) **Abstract**

The present invention relates to a jelly roll type electrode assembly in which a first electrode, a separator, and a second electrode are stacked and wound, wherein the outermost part of the first electrode includes a first electrode double-sided maintenance part having first electrode active material layers on one surface and the opposite surface of a first electrode current collector, the first electrode double-sided maintenance part including a region corresponding to the longitudinal end of the second electrode.

## Description

### [Technical Field]

The present invention relates to a jelly-roll type electrode assembly and a secondary battery including the same, and more particularly, to a jelly-roll type electrode assembly having an outer circumferential tab structure and a cylindrical secondary battery including the same.

This application claims priority to and the benefit of Korean Patent Application No. 10-2022-0156478 filed in the Korean Intellectual Property Office on November 21, 2022, the entire contents of which are incorporated herein by reference.

### [Background Art]

For a cylindrical battery, a jelly-roll type electrode assembly is manufactured by rolling a long electrode having a predetermined width into a roll form. A cylindrical battery manufactured by inserting such a jelly-roll type electrode assembly into a battery case is subjected to repeating contraction/expansion of the electrode during charging and discharging, and stress due to a step is formed depending on a structure of the jelly-roll.

In particular, in the case of a jelly-roll type electrode assembly having a negative electrode-outermost structure, the outermost negative electrode covers an end portion of a positive electrode, and a space next to the free edge of the positive electrode is left empty due to a thickness of the positive electrode. In this case, the step due to the thickness of the positive electrode forms stress in the negative electrode, and the stress may be concentrated on a surface opposite to a surface of the negative electrode facing the positive electrode during charging and discharging, thereby causing a crack on an outer side of the negative electrode.

In order to prevent the crack on the outer side of the negative electrode, it is necessary to develop a technology capable of addressing the stress concentration of the negative electrode in the corresponding region.

### [Detailed Description of the Invention]

### [Technical Problem]

The present invention has been made in an effort to provide a jelly-roll type electrode assembly whose design has been changed, and a secondary battery including the same.

However, the problem to be solved by the present invention is not limited to the above-described problem, and other problems not described will be apparently understood by one skilled in the art from the following description.

### [Technical Solution]

An exemplary embodiment of the present invention provides a jelly-roll type electrode assembly in which a first electrode, a separator, and a second electrode are stacked and wound, wherein an outermost portion of the first electrode includes a first electrode double-side coated portion provided with first electrode active material layers on one surface and an opposite surface of a first electrode current collector, and wherein the first electrode double-side coated portion includes a region corresponding to a longitudinal end portion of the second electrode.

Another exemplary embodiment of the present invention provides a secondary battery including the jelly-roll type electrode assembly described above; and a battery case for accommodating the electrode assembly.

### [Advantageous Effects]

The jelly-roll type electrode assembly and the secondary battery including the same according to an exemplary embodiment of the present invention includes the first electrode double-side coated portion, whereby it is possible to prevent crack and deformation of the electrode assembly due to stress concentration on the outermost first electrode.

In addition, the jelly-roll type electrode assembly and the secondary battery including the same according to an exemplary embodiment of the present invention have a process advantage because the double-side coated portion can be formed using the same material and equipment as the first electrode active material layer, can be produced at low costs because a separate disconnection prevention tape can be omitted, and can reduce a possibility of occurrence of defects by simplifying the process.

Additionally, the jelly-roll type electrode assembly and the secondary battery including the same according to an exemplary embodiment of the present invention can prevent reduction in roundness and local problems such as lithium precipitation due to formation of additional steps by adjusting a position and a thickness of the double-side coated portion, and can minimize occurrence of additional cracks and deformation of the electrode assembly.

The effects of the present invention are not limited to the foregoing effects, and effects not described will be apparently understood by one skilled in the art from the present specification and accompanying drawings.

### [Brief Description of Drawings]

FIG. 1 shows a jelly-roll type electrode assembly including a double-side coated portion according to an exemplary embodiment of the present invention.
FIG. 2 shows a jelly-roll type electrode assembly including a single-side coated portion according to an exemplary embodiment of the present invention.
FIG. 3 is a reference view showing a jelly-roll type electrode assembly.
FIG. 4 shows a jelly-roll type electrode assembly according to an exemplary embodiment of the present invention.
FIG. 5 schematically shows a step portion of a jelly-roll type electrode assembly according to an exemplary embodiment of the present invention.
FIG. 6 shows a secondary battery according to an exemplary embodiment of the present invention.
FIG. 7 is images showing evaluation results of occurrence of core crack for electrode assemblies according to Example 1 and Comparative Example 1.

### <Explanation of Reference Numerals and Symbols>

100, 100': first electrode
10: first electrode double-side coated portion
10': region of first electrode double-side coated portion corresponding to longitudinal end portion of second electrode
12, 13: first electrode single-side coated portion
101: first electrode current collector
102, 103: first electrode active material layer
110: longitudinal end portion of first electrode
L1, L1': distance between longitudinal end portion of first electrode double-side coated portion and longitudinal end portion of second electrode
L2, L3: length, in longitudinal direction, of first electrode single-side coated portion
20, 20': separator
300: second electrode
301: second electrode current collector
302, 303: second electrode active material layer
310: longitudinal end portion of second electrode
60: step portion
70: disconnection prevention tape
80: battery case
1000: secondary battery

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

Hereinafter, the present invention will be described in detail with reference to the drawings. However, it should be noted that the drawings are provided for illustrating the present invention, and the scope of the present invention is not limited by the drawings.

An exemplary embodiment of the present invention provides a jelly-roll type electrode assembly in which a first electrode, a separator, and a second electrode are stacked and wound, wherein an outermost portion of the first electrode includes a first electrode double-side coated portion having first electrode active material layers provided on one surface and an opposite surface of a first electrode current collector, and wherein the first electrode double-side coated portion includes a region corresponding to a longitudinal end portion of the second electrode.

The jelly-roll type electrode assembly and the secondary battery including the same according to an exemplary embodiment of the present invention includes the first electrode double-side coated portion, whereby it is possible to prevent crack and deformation of the electrode assembly due to stress concentration on the outermost first electrode. In addition, the jelly-roll type electrode assembly and the secondary battery including the same according to an exemplary embodiment of the present invention have a process advantage because the double-side coated portion can be formed using the same material and equipment as the first electrode active material layer, can be produced at low costs because a separate disconnection prevention tape can be omitted, and can reduce a possibility of occurrence of defects by simplifying the process. Additionally, the jelly-roll type electrode assembly and the secondary battery including the same according to an exemplary embodiment of the present invention can prevent reduction in roundness and local problems such as lithium precipitation due to formation of additional steps by adjusting a position and a thickness of the double-side coated portion, and can minimize occurrence of additional cracks and deformation of the electrode assembly.

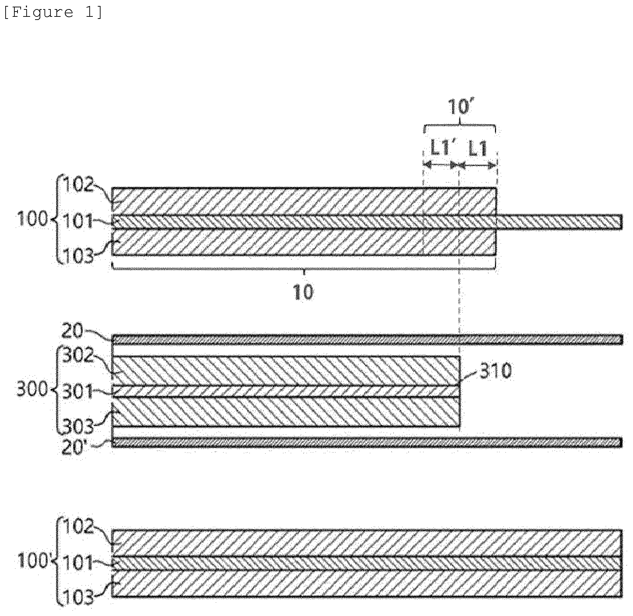

FIG. 1 shows a jelly-roll type electrode assembly including a double-side coated portion according to an exemplary embodiment of the present invention. Specifically, FIG. 1 is a view showing an exemplary embodiment including a first electrode double-side coated portion in a region of a first electrode current collector corresponding to a longitudinal end portion of a second electrode.

Referring to FIG. 1, a jelly-roll type electrode assembly according to an exemplary embodiment of the present invention is a jelly roll-type electrode assembly in which first electrodes 100 and 100', separators 20 and 20', and a second electrode 300 are stacked and wound, wherein the second electrode 300 includes a second electrode current collector 301, and second electrode active material layers 302 and 303 provided on at least one surface of the second electrode current collector 301, and wherein the first electrode 100 includes a first electrode current collector 101, and first electrode active material layers 102 and 103 provided on at least one surface of the first electrode current collector 101. In addition, an outermost portion of the first electrode 100 includes a first electrode double-side coated portion 10 provided with the first electrode active material layers 102 and 103 on one surface and an opposite surface of the first electrode current collector 101, and the first electrode double-side coated portion 10 includes a region 10' corresponding to a longitudinal end portion 310 of the second electrode. As used herein, the 'longitudinal direction' may refer to a longitudinal direction of an electrode assembly in which a first electrode, a separator, and a second electrode are stacked before winding, i.e., a direction perpendicular to a winding axis direction of the electrode assembly after winding, and the 'corresponding region' may refer to one region including a line perpendicular to the longitudinal direction of the electrode assembly and parallel to the winding axis direction. Specifically, the 'region corresponding to the longitudinal end portion of the second electrode' may refer to a region composed of a region on the first electrode double-side coated portion ranging from a line parallel to a longitudinal end portion of the second electrode to a longitudinal end portion of the first electrode double-side coated portion, i.e., a region having a distance L1 between the longitudinal end portion of the first electrode double-side coated portion and the longitudinal end portion of the second electrode, based on the longitudinal direction of the first electrode, and a region having the same distance L1' as the distance L1 in an opposite direction to the longitudinal direction of the first electrode. In other words, the region corresponding to the longitudinal end portion of the second electrode may refer to a region on the first electrode double-side coated portion with distances of L1 and L1' on both sides in the longitudinal direction of the first electrode from a line parallel to the longitudinal end portion of the second electrode, and the region 10' corresponding to the longitudinal end portion 310 of the second electrode may have a length of 'L1+L1' = L1+L1 = 2 × L1'.

Since the first electrode double-side coated portion includes a region corresponding to the longitudinal end portion of the second electrode, cracks and deformation of the electrode assembly due to stress concentration on the outermost first electrode can be prevented. In other words, the outermost portion of the first electrode is provided with the first electrode active material layer 102 on the opposite surface of the first electrode current collector 101 located in the region corresponding to the longitudinal end portion 310 of the second electrode, whereby a thickness of the surface facing the longitudinal end portion of the second electrode can be increased. With this, it is possible to prevent damage to the first electrode located in the outermost portion from cracks and deformation of the electrode assembly due to formation of a step resulting from a thickness of the longitudinal end portion of the second electrode and stress concentration in the corresponding region that occurs during charging and discharging, and to improve the life characteristics of the battery.

According to an exemplary embodiment of the present invention, longitudinal end portions of the first electrode active material layers may not coincide with the longitudinal end portion of the second electrode. Specifically, the first electrode active material layer may form a longitudinal end portion at a position different from the longitudinal end portion of the second electrode, and the longitudinal end portion of the first electrode active material layer may be formed at a predetermined distance away from the longitudinal end portion of the second electrode. With this, an additional step may not be formed in relationship with a thickness of the first electrode active material layer formed on a surface of the first electrode current collector facing the longitudinal end portion of the second electrode or on an opposite surface to the facing surface, and the first electrode double-side coated portion may be adjusted to include the region corresponding to the longitudinal end portion of the second electrode.

That is, referring to FIG. 1, by adjusting the distance L1, L1' between the longitudinal end portion of the first electrode double-side coated portion and the longitudinal end portion of the second electrode to a specific range, the region 10' of the first electrode double-side coated portion 10 corresponding to the longitudinal end portion 310 of the second electrode may be adjusted to a specific range.

According to an exemplary embodiment of the present invention, a length, in the longitudinal direction, of the region of the first electrode double-side coated portion corresponding to the longitudinal end portion of the second electrode may be 9 mm or greater and 20 mm or less. Specifically, a length, in the longitudinal direction, of the region 10' of the first electrode double-side coated portion corresponding to the longitudinal end portion of the second electrode may be 11 mm or greater, 13 mm or greater, or 15 mm or greater, and the length, in the longitudinal direction, of the region 10' of the first electrode double-side coated portion corresponding to the longitudinal end portion of the second electrode may be 18 mm or less, 16 mm or less, or 15 mm or less. When the length, in the longitudinal direction, of the region of the first electrode double-side coated portion corresponding to the longitudinal end portion of the second electrode satisfies the above-described range, the opposite surface to the surface of the first electrode current collector facing the longitudinal end portion of the second electrode can be efficiently complemented, and crack and deformation due to stress concentration on the outermost first electrode can be prevented.

According to another exemplary of the present invention, the first electrode may further include a first electrode single-side coated portion provided with a first electrode active material layer on one surface of the first electrode current collector.

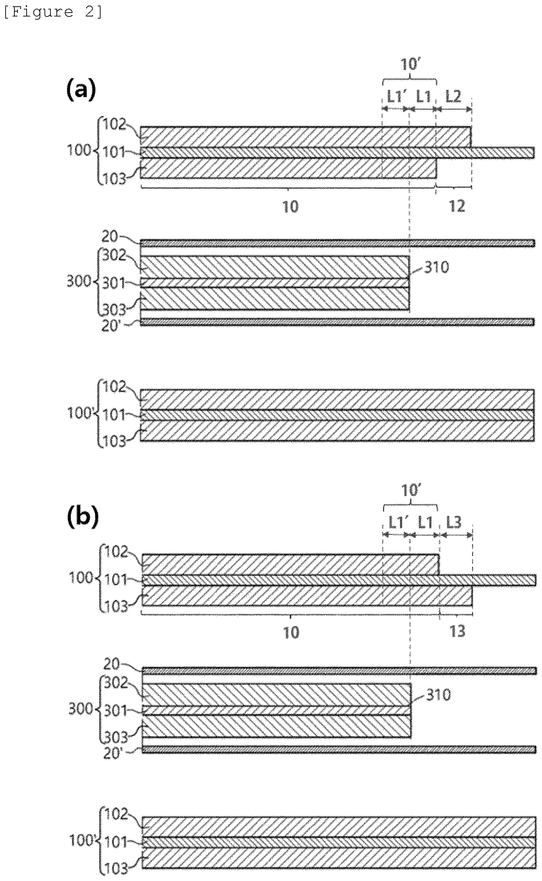

FIG. 2 shows a jelly-roll type electrode assembly including a single-side coated portion according to an exemplary embodiment of the present invention. Specifically, FIG. 2(a) shows an exemplary embodiment including a first electrode double-side coated portion 10, and further including a first electrode single-sided coated portion 12 at a longitudinal end portion of the first electrode double-side coated portion 10, and FIG. 2(b) shows an exemplary embodiment including a first electrode double-side coated portion 10, and further including a first electrode single-sided coated portion 13 at a longitudinal end portion of the first electrode double-side coated portion 10.

Referring to FIG. 2, the first electrode 100 may further include a first electrode single-side coated portion 12 provided with a first electrode active material layer 102 on one surface of the first electrode current collector 101, or a first electrode single-side coated portion 13 provided with a first electrode active material layer 103 on one surface. Specifically, the first electrode single-sided coated portion 12 or 13 with a predetermined length may be included at a longitudinal end portion of the first electrode double-side coated portion. That is, the first electrode active material layer 102 formed on one surface of the first electrode current collector 101 and the first electrode active material layer 103 formed on the opposite surface may form longitudinal end portions at different positions, respectively. With this, by adjusting the lengths of the first electrode active material layers, the first electrode double-side coated portion is made to include the region 10' corresponding to the longitudinal end portion of the second electrode, and the problem of forming an additional step that may occur when the first electrode active material layers formed on one surface and the opposite surface of the first electrode current collector 101 form end portions at the same position can be prevented.

According to an exemplary embodiment of the present invention, a length, in the longitudinal direction, of the single-side coated portion may be 3 mm or less. Specifically, lengths L2 and L3, in the longitudinal direction, of the single-side coated portions may be greater than 0 mm, 1 mm or greater, or 2 mm or greater, and the lengths L2 and L3, in the longitudinal direction, of the single-side coated portions may be 3 mm or less, 2 mm or less, or 1 mm or less. When the length L2, in the longitudinal direction, of the single-sided coated portion satisfies the above-described range, the surface opposite to the surface of the first electrode current collector facing the longitudinal end portion of the second electrode can be effectively supplemented. In addition, when the length L3, in the longitudinal direction, of the single-sided coated portion satisfies the above-described range, the surface of the first electrode current collector facing the longitudinal end portion of the second electrode can be effectively supplemented, and the formation of an additional step can be minimized in relationship with the thickness of the longitudinal end portion of the second electrode.

According to an exemplary embodiment of the present invention, the first electrode may further include a first electrode uncoated portion not provided with the first electrode active material layer. Specifically, according to an exemplary embodiment of the present invention, the first electrode may include a first electrode double-side coated portion in a region corresponding to a longitudinal end portion of the second electrode of the first electrode current collector, and may further include a first electrode uncoated portion not provided with a first electrode active material layer at a longitudinal end portion of the first electrode double-side coated portion. In addition, according to an exemplary embodiment of the present invention, the first electrode may include a first electrode single-side coated portion, and may further include a first electrode uncoated portion not provided with a first electrode active material layer at a longitudinal end portion of the first electrode single-side coated portion. The first electrode uncoated portion is further included, so that productivity can be increased by preventing unnecessary application of a first electrode active material slurry in a region not facing the second electrode, and an electrode assembly having an outer circumferential tab structure is implemented by exposing a surface of the first electrode current collector and causing the exposed surface to directly face a battery case.

According to an exemplary embodiment of the present invention, the first electrode uncoated portion may further include a first electrode tab provided on one surface of the first electrode current collector. Specifically, the surface of the first electrode current collector may be exposed and directly faced with a battery case to serve as a tab. However, depending on the inside of the battery case and the structure of the electrode assembly, a first electrode tab may be included on one surface of the first electrode current collector exposed and a conductive passage may be additionally formed, whereby a low-resistance design may be implemented.

According to an exemplary embodiment of the present invention, the first electrode active material layers provided on one surface and the opposite surface of the first electrode current collector at the first electrode double-side coated portion may have thicknesses different from each other. Specifically, referring to FIG. 1, thicknesses of the first electrode active material layers 102 and 103 provided on one surface and an opposite surface of the first electrode current collector 101 in the region 10' of the first electrode double-side coated portion 10 corresponding to the longitudinal end portion of the second electrode may be such that at least a portion thereof is smaller than thicknesses of the first electrode active material layers 102 and 103 provided on one surface and the opposite surface of the first electrode current collector 101 in the remaining portion of the region 10' corresponding to the longitudinal end portion of the second electrode. In addition, the thicknesses of the first electrode active material layers 102 and 103 provided on one surface and the opposite surface of the first electrode current collector 101 in the region 10' of the first electrode double-side coated portion 10 corresponding to the longitudinal end portion of the second electrode may be such that at least a portion thereof is smaller than thicknesses of the first electrode active material layers 102 and 103 in the remaining portion of the first electrode double-side coated portion 10. More specifically, the first electrode active material layer may be adjusted so that a specific region has a thickness smaller than the remaining region by varying a degree of rolling on a part thereof or adjusting an amount of a first electrode active material slurry to be applied. With this, the formation of an additional step may be minimized in relationship with the longitudinal end portion of the second electrode, the first electrode tab, or the like.

According to an exemplary embodiment of the present invention, thicknesses of the first electrode active material layers provided on one surface and the opposite surface of the first electrode current collector at the first electrode double-side coated portion may be different from a thickness of the first electrode active material layer provided on one surface or opposite surface of the first electrode current collector at the first electrode single-side coated portion. Specifically, referring to FIG. 2, a thickness of the first electrode active material layer 102, 103 provided on one surface or opposite surface of the first electrode current collector at the first electrode single-side coated portion 12, 13 may be such that at least a portion thereof is smaller than thicknesses of the first electrode active material layers 102 and 103 provided on one surface and the opposite surface of the first electrode current collector 101 at the first electrode double-side coated portion 10. More specifically, the first electrode active material layer may be adjusted so that a portion has a thickness smaller than the remaining portion by varying a degree of rolling on the portion or adjusting an amount of a first electrode active material slurry to be applied. With this, the formation of an additional step may be minimized in relationship with the longitudinal end portion of the second electrode, the first electrode tab, or the like.

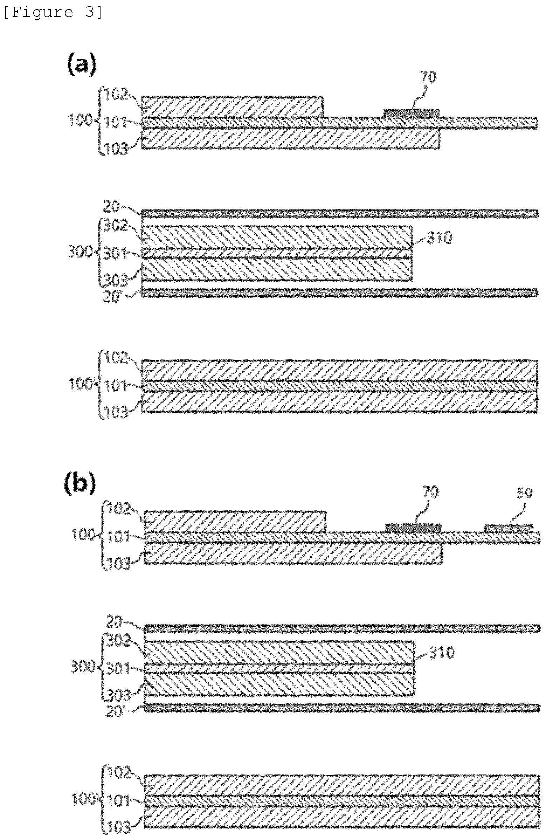

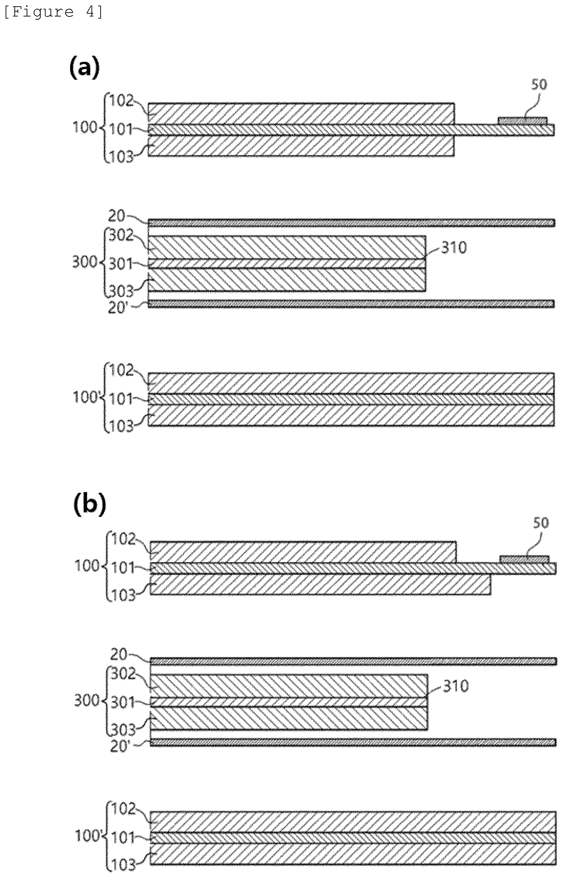

FIG. 3 is a reference view showing a jelly-roll type electrode assembly, and FIG. 4 shows a jelly-roll type electrode assembly according to an exemplary embodiment of the present invention.

Specifically, FIG. 3(a) shows a jelly-roll type electrode assembly in which a first electrode double-side coated portion does not include a region corresponding to a longitudinal end portion of a second electrode and a first electrode single-sided coated portion include the region corresponding to the longitudinal end portion of the second electrode, and FIG. 3(b) shows the jelly-roll type electrode assembly shown in FIG. 3(a) further including a first electrode tab.

On the other hand, FIG. 4(a) shows a jelly-roll type electrode assembly in which a first electrode double-side coated portion includes a region corresponding to a longitudinal end portion of a second electrode and a first electrode single-sided coated portion does not include the region corresponding to the longitudinal end portion of the second electrode, and FIG. 4(b) shows the jelly-roll type electrode assembly shown in FIG. 4(a) further including a first electrode tab.

Referring to FIGS. 3 and 4, when the first electrode double-side coated portion 10 does not include a region corresponding to the longitudinal end portion 310 of the second electrode, that is, when the first electrode single-sided coated portion or the first electrode uncoated portion includes a region corresponding to the longitudinal end portion 310 of the second electrode, a space next to the longitudinal end portion 310 of the second electrode becomes empty while forming a step due to the thickness of the second electrode, and stress is concentrated on the corresponding region during charging and discharging of the battery, causing cracks in the first electrode present at the outermost side. In order to prevent this, a separate disconnection prevention tape 70 may be attached to the corresponding region. However, separate attaching process and equipment are required, which may reduce the productivity of the electrode assembly, and if defects occur depending on adjustment of the attachment position, the life characteristics of the battery may be deteriorated. On the other hand, the jelly-roll type electrode assembly according to an exemplary embodiment of the present invention adjusts the lengths of the first electrode active material layers 102 and 103 provided on one surface and the opposite surface of the first electrode current collector 101, in the corresponding region, rather than a separate disconnection prevention tape, thereby causing the first electrode double-side coated portion 10 to correspond to the longitudinal end portion 310 of the second electrode. As a result, the thickness of the first electrode current collector 101 at the corresponding position can be reinforced, and the width, length, and thickness of the first electrode double-side coated portion 10 can be adjusted to specific ranges. With this, the jelly-roll type electrode assembly and the secondary battery including the same according to an exemplary embodiment of the present invention have a process advantage because the double-side coated portion can be formed using the same material and equipment as the first electrode active material layer, can be produced at low costs because a separate disconnection prevention tape can be omitted, and can reduce a possibility of occurrence of defects by simplifying the process. Furthermore, even when the electrode assembly further includes a first electrode tab in accordance with a design, it can be easy to minimize the formation of an additional step in the relationship with the longitudinal end portion of the second electrode, the first electrode tab, or the like by adjusting the width, length, and thickness of the region 10' of the first electrode double-side coated portion 10 corresponding to the longitudinal end portion of the second electrode to specific ranges.

According to an exemplary embodiment of the present invention, a longitudinal end portion of the first electrode may extend longer than the longitudinal end portion of the second electrode and may be additionally wound to the outside of the electrode assembly.

Specifically, referring to FIGS. 1 and 4, in the electrode assembly according to an exemplary embodiment of the present invention, the first electrode 100 located on the outermost side may extend longer than the longitudinal end portion 310 of the second electrode 300 and may be additionally wound to the outside of the electrode assembly, and a step portion 60, which is a region where a step is formed due to the thickness of the second electrode, may be formed next to the longitudinal end portion 310 of the second electrode 300. In this case, the outermost portion of the first electrode 100 may include the first electrode double-side coated portion 10 provided with the first electrode active material layers 102 and 103 on one surface and the opposite surface of the first electrode current collector 101, and the first electrode double-side coated portion 10 may include a region corresponding to the longitudinal end portion 310 of the second electrode and the step portion 60.

According to an exemplary embodiment of the present invention, the second electrode may include a second electrode current collector and a second electrode active material layer provided on at least one surface of the second electrode current collector, and the second electrode active material layer may have a longitudinal end portion at the same position as the second electrode current collector. That is, the longitudinal end portions of the second electrode current collector and the second electrode active material layer may coincide.

In other words, the longitudinal end portion of the second electrode may be a free edge. Here, the free edge shape may refer to a shape in which an end portion of the electrode active material layer and an end portion of the electrode current collector coincide with each other, and this may include not only a case where the longitudinal end portions completely coincide with each other with respect to a plane perpendicular to the longitudinal direction but also a case where there are errors in process and measurement. That is, the jelly-roll type electrode assembly according to an exemplary embodiment of the present invention may have a structure in which the first electrode, which is the outermost layer, covers the longitudinal end portion of the second electrode having a free edge shape, and may include a step portion, which is an empty space formed in a region where the first electrode covers the second end portion of the second electrode.

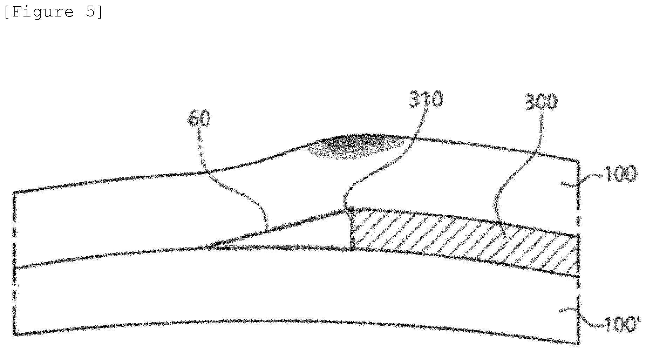

Specifically, referring to FIGS. 4 and 5, the first electrode 100 is present on the outermost side of an electrode assembly, and the first electrode 100 may have the first electrode active material layers 102 and 103 provided on both surfaces of the first electrode current collector 101, respectively, and may include an uncoated portion (non-coating area). On the other hand, the second electrode 300 is present on the outermost side of the electrode assembly, and the second electrode 300 has the second electrode active material layers 302 and 303 provided on both surfaces of the second electrode current collector 301, respectively, but may not include an uncoated portion (non-coating area). In other words, the electrode assembly may have a free edge shape where terminal ends of the second electrode current collector and the second electrode active material layer coincide with each other. That is, the longitudinal end portion 310 of the second electrode 300 may include the end portions of the second electrode active material layers 302 and 303 and the end portion of the second electrode current collector 301 having the same length in the longitudinal direction. The longitudinal end portion 310 of the second electrode 300 may be such that the end portions of the second electrode active material layers 302 and 303 and the end portion of the second electrode current collector 301 coincide with each other. On the other hand, according to an exemplary embodiment of the present invention, the uncoated portion present on a surface of the first electrode 100 opposite to a surface facing the longitudinal end portion 310 of the second electrode 300 may further include a first electrode tab 50.

According to an exemplary embodiment of the present invention, the first electrode may be a negative electrode, and the second electrode may be a positive electrode. Specifically, the first electrode, which is the outermost layer of the electrode assembly, may be a negative electrode, and the electrode assembly may have a negative electrode-outermost structure where a negative electrode/a separator/a positive electrode/a separator are wound. In other words, the jelly-roll type electrode assembly may have an outer circumferential tab structure where the negative electrode is exposed on the outermost side.

According to an exemplary embodiment of the present invention, the first electrode may include a first electrode current collector and a first electrode active material layer provided on the first electrode current collector. Specifically, the first electrode may include a first electrode current collector and a first electrode active material layer formed on one surface or both surfaces of the first electrode current collector and including a first electrode active material. In other words, the first electrode active material layer may be formed on a first electrode coated portion of the first electrode current collector, and a surface not provided with the first electrode active material layer may be expressed as a first electrode uncoated portion.

According to an exemplary embodiment of the present invention, the first electrode current collector may include a first electrode coated portion where the first electrode active material layer is formed and a first electrode uncoated portion where the first electrode active material layer is not formed, and may include a first electrode tab on the first electrode uncoated portion. Specifically, the first electrode current collector may include a first electrode uncoated portion and a first electrode tab formed on the first electrode uncoated portion. Accordingly, the manufactured electrode assembly may include one or more first electrode tabs.

According to an exemplary embodiment of the present invention, the first electrode active material layer may include a first electrode active material including one or more selected from the group consisting of a silicon-based material and a carbon-based material. In addition, the first electrode active material layer may further include a first electrode conductive material and a first electrode binder, and for the first electrode active material, the first electrode conductive material, and the first electrode binder, materials that are used as a negative electrode active material, a negative electrode conductive material, and a negative electrode binder in the art may be used without limitation.

According to an exemplary embodiment of the present invention, the first electrode current collector is not particularly limited as long as it has conductivity without inducing a chemical change in the battery. For example, for the first electrode current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the first electrode current collector.

A thickness of the first electrode current collector may be 16 um or greater and 180 um or less. However, the thickness of the first electrode current collector is not limited thereto.

According to an exemplary embodiment of the present invention, the first electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

According to an exemplary embodiment of the present invention, the first electrode conductive material is not particularly limited as long as it has conductivity without inducing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the second electrode may include a second electrode current collector and a second electrode active material layer provided on the second electrode current collector. Specifically, the second electrode may include a second electrode current collector and a second electrode active material layer formed on one surface or both surfaces of the second electrode current collector and including a second electrode active material. In other words, the second electrode active material layer may be formed on a second electrode coated portion of the second electrode current collector, and a surface not provided with the second electrode active material layer may be expressed as a second electrode uncoated portion.

According to an exemplary embodiment of the present invention, the second electrode current collector may include a second electrode coated portion where the second electrode active material layer is formed and a second electrode uncoated portion where the second electrode active material layer is not formed, and may include a second electrode tab on the second electrode uncoated portion. Specifically, the second electrode current collector may include a second electrode uncoated portion and a second electrode tab formed on the second electrode uncoated portion. Accordingly, the manufactured electrode assembly may include one or more second electrode tabs.

According to an exemplary embodiment of the present invention, the second electrode current collector is not particularly limited as long as it has conductivity without inducing a chemical change in the battery. Specifically, for the second electrode current collector, stainless steel, aluminum, nickel, titanium, fired carbon, aluminum or stainless steel each surface-treated with carbon, nickel, titanium, silver, or the like, or the like may be used.

In addition, the second electrode current collector may typically have a thickness of 80 um or greater and 190 um or less, and a surface of the second electrode current collector may be formed with microscopic irregularities to enhance an adhesive force of the second electrode active material. For example, the second electrode current collector may be used in various forms such as a film, a sheet, a foil, a net, a porous body, a foamed body, and a non-woven fabric body.

According to an exemplary embodiment of the present invention, the second electrode active material may be a positive electrode active material that is typically used. Specifically, the second electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The second electrode may be Li metal.

According to an exemplary embodiment of the present invention, the second electrode active material layer may further include a second electrode conductive material and a second electrode binder. The second electrode conductive material is used to impart conductivity to the electrode, and can be used without particular limitation as long as it does not cause a chemical change and has electronic conductivity in a battery to be configured. Specific examples of the second electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

Additionally, the second electrode binder serves to improve adhesion between particles of the second electrode active material and an adhesive force between the second electrode active material and the second electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the jelly-roll type electrode assembly may further include a plurality of separators. For example, the jelly-roll type electrode assembly may have a structure where a first electrode/a separator/a second electrode/a separator are sequentially stacked. The separator serves to separate the first electrode and the second electrode and to provide a movement path of lithium ions, and any separator may be used without particular limitation as long as it is typically used as a separator in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric formed of high melting point glass fibers, polyethylene terephthalate fibers, or the like may be used. In addition, the separator may typically have a thickness of 10 um or greater and 20 um or less. A separator coated with a material including a ceramic component or a polymer material in order to secure heat resistance or mechanical strength may be used. A separator having a single layer or multilayer structure may be selectively used.

An exemplary embodiment of the present invention provides a secondary battery including the jelly-roll type electrode assembly, and a battery case for accommodating the electrode assembly, and the description for the jelly-roll type electrode assembly is the same as described above.

The secondary battery according to an exemplary embodiment of the present invention includes the first electrode double-side coated portion, whereby it is possible to prevent crack and deformation of the electrode assembly due to stress concentration on the outermost first electrode. In addition, the secondary battery according to an exemplary embodiment of the present invention has a process advantage because the double-side coated portion can be formed using the same material and equipment as the first electrode active material layer, can be produced at low costs because a separate disconnection prevention tape can be omitted, and can reduce a possibility of occurrence of defects by simplifying the process. Additionally, the secondary battery according to an exemplary embodiment of the present invention can prevent reduction in roundness and local problems such as lithium precipitation due to formation of additional steps by adjusting a position and a thickness of the double-side coated portion, and can minimize occurrence of additional cracks and deformation of the electrode assembly.

According to an exemplary embodiment of the present invention, the secondary battery may include a cap assembly coupled to an opening portion of the battery case, and the cap assembly may include a top cap, a safety vent, and a current cutoff element.

According to an exemplary embodiment of the present invention, the first electrode may be in direct contact with an inner surface of the battery case so that the battery case serves as a first electrode terminal.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

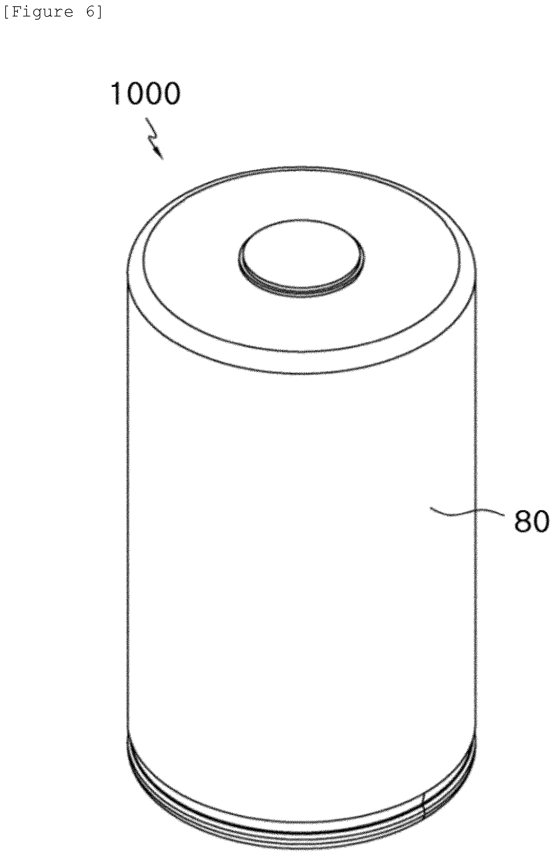

According to an exemplary embodiment of the present invention, the battery case may have a cylindrical shape. That is, referring to FIG. 6, since the jelly-roll type electrode assembly according to the present invention can be accommodated in a cylindrical battery case 80, and the battery case in which an assembly including a first electrode, a separator, and a second electrode, a cap assembly, and an electrolyte are included has a cylindrical shape, so the manufactured secondary battery 1000 itself may have a cylindrical shape.

An exemplary embodiment of the present invention provides a battery module including the secondary battery as a unit cell, and a battery pack including the battery module. Since the battery module and the battery pack include the secondary battery with high capacity, high battery stability and high life characteristics, the battery module and the battery pack may be used as a power source of a medium and large sized device selected from the group consisting of an electric vehicle, a hybrid electric vehicle, a plug-in hybrid electric vehicle, and a power storage system.

Below, Examples will be described in detail to specifically describe the present invention. However, the Examples according to the present invention may be modified in other forms, and the scope of the present invention is not construed as being limited to the following Examples. The Examples of the present specification are provided to more completely explain the present invention to one skilled in the art.

### Examples

### Example 1

### Preparation of Electrode Assembly

A second electrode active material slurry was prepared by adding Li(Ni_{0.89}Co_{0.07}Mn_{0.04})O₂ as a second electrode active material, CNT as a second electrode conductive material, and polyvinylidene fluoride (PVdF) as a binder to N-methyl-2-pyrrolidone (NMP) at a weight ratio of 97.8:0.6:1.6. The second electrode active material slurry was coated on an aluminum current collector with a thickness of 15 um and a length of 62 mm in a width direction, followed by drying and rolling to form a second electrode active material layer, whereby a second electrode with a total thickness of 129 um was prepared.

Next, a first electrode active material slurry was prepared by preparing 50 parts by weight of natural graphite and artificial graphite as a first electrode active material, respectively, mixing the first electrode active material, carbon black as a conductive material, and a mixture, as a binder, of styrene-butadiene rubber (SBR) and carboxymethyl cellulose (CMC) at a weight ratio of 97.12:0.4:2.48. The first electrode active material slurry was coated on a copper (Cu) current collector with a thickness of 8 um and a length of 64.9 mm in a width direction, followed by drying and rolling to form a first electrode active material layer, whereby a first electrode with a total thickness of 162 um was formed. In this case, a first electrode double-side coated portion and a first electrode single-sided coated portion were formed so that a length L1+L1', in the longitudinal direction, of the first electrode double-side coated portion corresponding to a longitudinal end portion of the second electrode was 20 mm and a length L3, in the longitudinal direction, of the first electrode single-sided coated portion was 2 mm. As a result, a structure as shown in FIG. 2(b) was formed.

Thereafter, two separators were sequentially arranged and wound using a winding core, and then the first electrode was introduced between the two separators, which was then additionally wound.

After the separator and the first electrode were wound about one turn, the second electrode was introduced and wound, and a seal tape made of PET was attached and finished to wrap around the upper and lower outer peripheral surfaces of the jelly-roll at the end portion where the winding was completed, whereby a jelly-roll type electrode assembly was prepared.

### Preparation of Secondary Battery

A secondary battery was prepared by inserting the jelly-roll type electrode assembly into a cylindrical battery case, injecting an electrolyte solution in which ethylene carbonate (EC), ethyl methyl carbonate (EMC), and diethyl methyl carbonate (DMC) were mixed at a volume ratio of 20:5:75 and LiPF₆ was dissolved therein to be 0.7 M, and sealing the cylindrical battery case with a cap assembly.

### Comparative Example 1

A jelly-roll type electrode assembly and a secondary battery were prepared in the same manner as in Example 1, except that a first electrode double-side coated portion was not provided at a position corresponding to the longitudinal end portion of the second electrode, and a disconnection prevention tape with a length of 17 mm in the longitudinal direction was attached so that the longitudinal end portion of the second electrode coincided with a central portion of the disconnection prevention tape, whereby a structure as shown in FIG. 3(a) was formed. In this case, based on the longitudinal end portion of the second electrode, the length, in the longitudinal direction, of the single-side coated portion of the first electrode was adjusted to be 54 mm in a winding direction of the electrode assembly and to be 9 mm in a direction opposite to the winding direction.

### Experimental Examples: Evaluation of occurrence of core crack

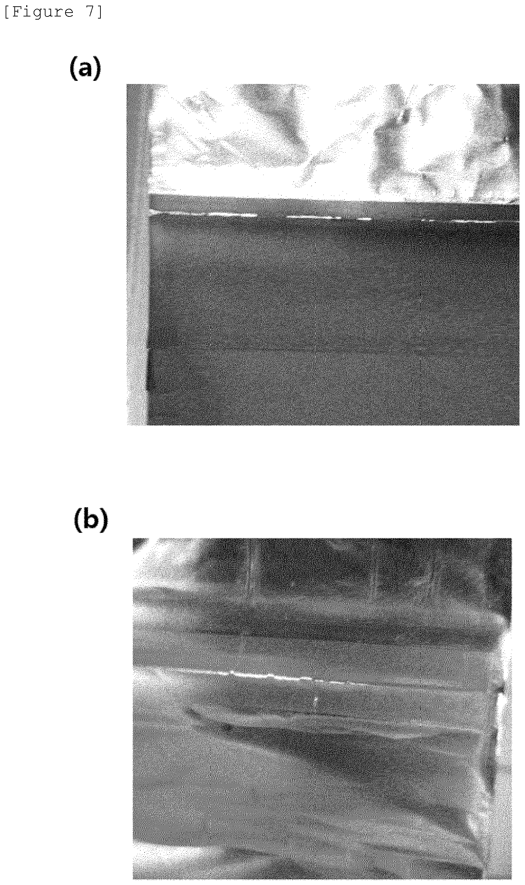

The occurrence of core crack was evaluated for the electrode assemblies of Example 1 and Comparative Example 1 using the following method, and the results are shown in FIG. 7.

Specifically, the secondary batteries prepared in Example 1 and Comparative Example 1 were subjected to 3 cycles of 4.2 V-2.5 V, 0.2 C charging, and 0.2 C discharging, respectively, leading to preparation of activated secondary batteries. Thereafter, the activated secondary batteries were subjected to 30 cycles under conditions of 4.35 V(1 C)-2.0 V(1 C), @25°C, respectively, and then the secondary batteries were disassembled and checked with naked eyes for occurrence of cracks or wrinkles in the core part. In this case, if cracks or wrinkles were included in the core part, it was evaluated that core crack occurred.

FIG. 7 is images showing evaluation results of occurrence of core crack for electrode assemblies according to Example 1 and Comparative Example 1.

Referring to FIG. 7, in the case of the electrode assembly according to Comparative Example 1, the first electrode double-side coated portion was not formed at a position corresponding to the longitudinal end portion of the second electrode at the core part of the electrode assembly. Therefore, it could be confirmed that stress generated by the step formed due to the thickness of the longitudinal end portion of the second electrode was concentrated on the first electrode corresponding to the longitudinal end portion of the second electrode, causing wrinkles or cracks in the core part.

On the other hand, in the case of the electrode assembly according to Example 1, the first electrode double-side coated portion was formed at a position corresponding to the longitudinal end portion of the second electrode at the core part of the electrode assembly. Therefore, it could be confirmed that cracks and deformation of the first electrode corresponding to the longitudinal end portion of the second electrode could be prevented. In addition, it could be confirmed that the electrode assembly according to Example 1 was provided with the additional first electrode single-side coated portion to prevent reduction in roundness and formation of an additional step, thereby dispersing the stress concentrated on the outermost first electrode.

With this, it can be seen that the jelly-roll type electrode assembly according to an exemplary embodiment of the present invention prevents cracks and deformation of the electrode assembly due to stress concentration on the outermost first electrode, thereby improving the stability and life characteristics of the secondary battery. In addition, it can be seen that the jelly-roll type electrode assembly according to an exemplary embodiment of the present invention has a process advantage because the double-side coated portion can be formed using the same material and equipment as the first electrode active material layer, can be produced at low costs because a separate disconnection prevention tape can be omitted, and can reduce a possibility of occurrence of defects by simplifying the process.

Although the preferred embodiments have been provided for better understanding of the present invention, it will be apparent to one skilled in the art that the embodiments are only provided to illustrate the present invention and various modifications and alterations are possible within the scope and technical spirit of the present invention. Such modifications and alterations naturally fall within the scope of claims appended below.

## Claims

1. A jelly-roll type electrode assembly in which a first electrode, a separator, and a second electrode are stacked and wound,
wherein an outermost portion of the first electrode comprises a first electrode double-side coated portion provided with first electrode active material layers on one surface and an opposite surface of a first electrode current collector, and
wherein the first electrode double-side coated portion comprises a region corresponding to a longitudinal end portion of the second electrode.

2. The jelly-roll type electrode assembly of claim 1, wherein longitudinal end portions of the first electrode active material layers do not coincide with the longitudinal end portion of the second electrode.

3. The jelly-roll type electrode assembly of claim 1, wherein the first electrode further comprises a first electrode single-side coated portion provided with a first electrode active material layer on one surface of the first electrode current collector.

4. The jelly-roll type electrode assembly of claim 3, wherein the first electrode single-side coated portion does not comprise the region corresponding to the longitudinal end portion of the second electrode.

5. The jelly-roll type electrode assembly of claim 3, wherein a length, in a longitudinal direction, of the first electrode single-side coated portion is 3 mm or less.

6. The jelly-roll type electrode assembly of claim 1, wherein the first electrode further comprises a first electrode uncoated portion not provided with a first electrode active material layer.

7. The jelly-roll type electrode assembly of claim 6, wherein the first electrode uncoated portion further comprises a first electrode tab provided on one surface of the first electrode current collector.

8. The jelly-roll type electrode assembly of claim 1, wherein the first electrode active material layers provided on one surface and the opposite surface of the first electrode current collector at the first electrode double-side coated portion have thicknesses different from each other.

9. The jelly-roll type electrode assembly of claim 1, wherein a longitudinal end portion of the first electrode extends longer than the longitudinal end portion of the second electrode and is additionally wound to an outside of the electrode assembly.

10. The jelly-roll type electrode assembly of claim 1, wherein the second electrode comprises a second electrode current collector; and a second electrode active material layer provided on at least one surface of the second electrode current collector, and wherein the second electrode active material layer forms a longitudinal end portion at the same position as the second electrode current collector.

11. The jelly-roll type electrode assembly of claim 1, wherein the first electrode is a negative electrode, and the second electrode is a positive electrode.

12. A secondary battery comprising:
the jelly-roll type electrode assembly according to any one of claims 1 to 11; and
a battery case for accommodating the jelly-roll type electrode assembly.

13. The secondary battery of claim 12, wherein the battery case has a cylindrical shape.
